# EUROPEAN PATENT APPLICATION

(11) **EP 1 593 768 A2**
(43) Date of publication of application: **09.11.2005**
(21) Application number: 05250249.9
(22) Date of filing: 19.01.2005
(51) Int. Cl.: D06F 39/10

(54) **Washing machine having drain casing**

(30) Priority: 04.05.2004 KR 2004031439
(71) Applicant: SAMSUNG ELECTRONICS CO., LTD., Suwon-city, Gyeonggi-do (KR)
(72) Inventor: Song, Chang Min, Suwon-Si, Gyeonggi-Do (KR); Kim, Do Weon, Paldal-Gu, Suwon-Si, Gyeonggi-Do (KR)
(74) Representative: Davies, Robert Ean

(57) **Abstract**

A washing machine filter having improved structures of a drain filter (30) and a drain casing (20) so that foreign substances are effectively eliminated from wash water, thereby making it less necessary to frequently clean the drain filter (30). The drain filter (30) includes a filter member (31) having filter holes (34) and filter protrusions (35), and a hand lever (32) rotatably connected to the front end of the filter member (31). The filter protrusions (35), having a length larger than the depth of the filter holes (34), are perpendicularly protruded upward from the surface of the filter member (31), and each of the filter holes (34) has a hexagonal shape. The drain filter (30) can be detachable from the drain casing (20) through a filter entrance (24) formed in the front surface of the drain casing (20). A guide plate (33) can be positioned at the rear end of the filter member (31), and a guide protrusion (24b) corresponding to the guide plate (33) can be formed at the filter entrance, thereby permitting alignment of the drain filter (30) within the drain casing (20).

## Description

The present invention relates to a washing machine, and more particularly but not exclusively to a washing machine having a drain casing, to which a drain filter with an improved structure for filtering wash water is included.

Generally, washing machines are apparatus for washing laundry and operate by rotating a cylindrical drum containing wash water and laundry. Washing machines are divided into drum-type washing machines, in which a drum is horizontally arranged so that laundry is washed by lifting the laundry along an inner surface of the drum and then dropping the laundry when the drum is rotated on a horizontal axis in a regular or opposite direction, and vertical axis-type washing machines, in which a drum is provided with a pulsator positioned therein and is vertically arranged so that laundry is washed by a water current generated when the pulsator is rotated in a regular or opposing direction.

Each of the above drum-type and vertical axis-type washing machines includes a tub containing wash water for washing the laundry contained in the drum, a drain pump for forcibly discharging the wash water from the tub to the outside after the wash of the laundry is completed, and a drain filter installed in front of the drain pump for filtering the wash water. Here, the tub, the drain filter, and the drain pump are interconnected by a drain hose extended from a main body of the washing machine.

The drain filter includes a plurality of filter holes, having designated sizes, formed therein. When the drain pump is operated in a wash, rinse or dehydration mode, the wash water contained in the tub flows along the drain hose. Then, hard foreign substances, such as buttons or pins, or soft foreign substances, such as lint or hairs, are caught by the filter holes, thereby being prevented from being introduced into the drain pump.

In the above-described conventional washing machine, the drain filter operates as a filter only using the filter holes. Where the sizes of the filter holes are decreased, the foreign substances are more efficiently caught by the filter holes but the filter holes are more easily clogged by the foreign substances, thereby requiring the drain filter to be cleaned more frequently. On the other hand, when the sizes of the filter holes are increased, the filter holes do not easily stop the foreign substances, thereby not requiring the drain filter to be cleaned frequently but damage the drain pump, as the foreign substances having passed through the filter holes clog the drain pump. This causes the drain pump to operate inefficiently and potentially become damaged by the hard foreign substances.

Therefore, an aim of embodiments of the present invention is to provide a washing machine, including an improved drain filter structure so that foreign substances contained in wash water are effectively caught by the drain filter, thereby removing the necessity of frequently having to clean the drain filter.

Additional aspects and/or advantages of the invention will be set forth in part in the description which follows and, in part, will be obvious from the description, or may be learned by practice of the invention.

According to a first aspect of the present invention, there is provided a washing machine comprising: a tub to contain wash water; a drain casing to discharge the wash water; and a drain filter, positioned in the drain casing, comprising a filter member having a plurality of filter holes and a plurality of filter protrusions.

The filter protrusions may perpendicularly protrude upward from a surface of the filter member, and the filter protrusions, may have a length larger than a depth of the filter holes.

Additionally, the washing machine may further include a drain pump, installed in the drain casing, to forcibly discharge the wash water. The drain pump may include an impeller, with a driving motor for the impeller, positioned outside the drain casing, being connected to the impeller.

Further, a front surface of the drain casing may form a filter entrance through which the drain filter can be inserted into or removed from the drain casing, with the casing including an inlet pipe introducing the wash water into the drain casing and an outlet pipe permitting the wash water to be discharged from the drain casing, respectively positioned along alternate sides of the drain casing, and the impeller can be installed close to the outlet pipe. The filter member may also be inclined relative to the inlet pipe. In addition, a guide plate, having an upper end inclined relative to the filter member at a designated angle, may be positioned at the rear end of the filter member, a guide protrusion corresponding to the inclined upper end of the guide plate may be formed at the filter entrance of the drain casing, and when the upper end of the guide plate of the drain filter aligns with the guide protrusion of the drain casing the drain filter can be inserted into the drain casing.

Additionally, the washing machine may further include a housing containing the tub and the drain casing, and a support member for fixing the drain casing, which includes the drain filter, to a lower panel of the housing. A connection protrusion may protrude downward from a lower portion of the drain casing, and a groove for fixedly receiving the connection protrusion may be formed in an upper surface of the support member. Further, a screw hole for screwing the support member to the lower panel of the housing can be formed in a lower surface of the support member.

In the washing machine, the washing machine can be encapsulated in a housing and the drain filter can be removed from the drain casing without removal of the housing, with the drain casing protruding from the surface of the housing. Further, the filter member may be connected to an end of the drain filter, with the end of the drain filter being rotatable relative to the filter member, such that the filter member stays aligned in a particular orientation, and with the end of the drain filter being capable of sealing the drain filter into the drain casing.

According to a second aspect of the present invention, there is provided a drain casing, comprising: a main body having a designated volume; an inlet pipe and an outlet pipe respectively positioned along opposing sides of the main body; a filter entrance along a front surface of the main body; a drain filter, detachable from the main body through the filter entrance, with the drain filter including a plurality of filter holes and a plurality of filter protrusions; and a drain pump installed adjacent the main body to forcibly discharge wash water from within the main body through the outlet pipe.

The filter protrusions may protrude perpendicularly upward from a surface of a filter member of the drain filter, with the filter protrusions having a length larger than a depth of the filter holes. Further, a filter member, of the drain filter, may including the plurality of filter holes and protrusions, may be inclined relative to the inlet pipe.

For a better understanding of the invention, and to show how embodiments of the same may be carried into effect, reference will now be made, by way of example, to the accompanying diagrammatic drawings in which:
FIG. 1 is a perspective view illustrating a schematic internal structure of a drum-type washing machine, according to an embodiment of the present invention;
FIG. 2 is a perspective view of a drain casing and drain filter of the drum-type washing machine of FIG. 1;
FIG. 3 is a perspective view of a drain casing and drain filter just before the drain filter is connected to the drain casing, according to an embodiment of the present invention;
FIG. 4 is a cross-sectional view taken along the line IV-IV of FIG. 3; and
FIG. 5 is a cross-sectional view taken along the line V-V of FIG. 2.

Reference will now be made in detail to embodiments of the present invention, examples of which are illustrated in the accompanying drawings, wherein like reference numerals refer to the like elements throughout. The embodiments are described below to explain the present invention by referring to the figures.

Embodiments of the present invention can be applied to both a drum-type washing machine and a vertical axis-type washing machine, though only the drum-type washing machine will be illustrated herein, as an example, for convenience of description.

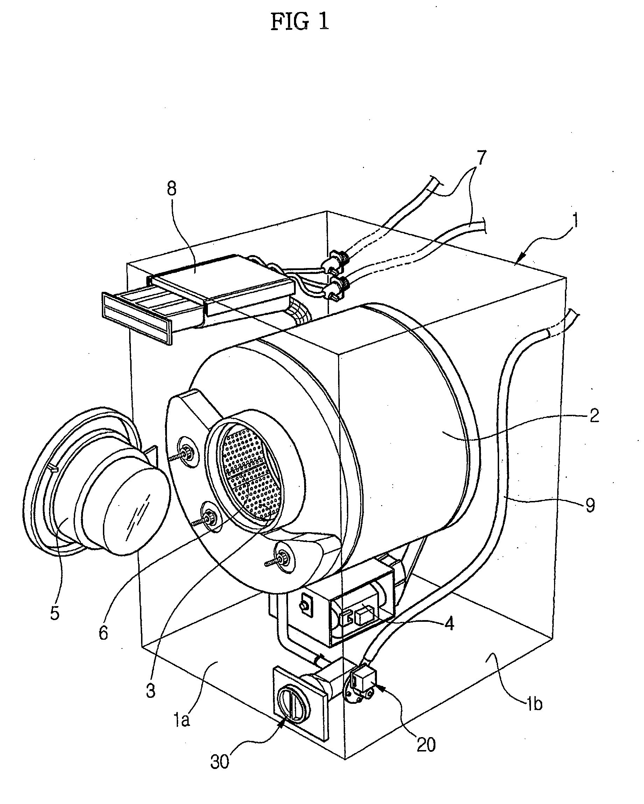

FIG. 1 is a perspective view illustrating a schematic internal structure of a drum-type washing machine in accordance with an embodiment of the present invention. As illustrated in FIG. 1, this drum-type washing machine, can include a housing 1 having a front panel 1a, a rear panel, both side panels, an upper panel, and a lower panel 1b,The washing machine further includes a tub 2, having a drum shape and horizontally positioned in the housing 1 for containing wash water, a drum 3, rotatably positioned in the tub 2 and provided with a plurality of dehydration holes formed therein, and a motor 4, for rotating the drum 3 in wash, rinse and dehydration modes.

Front surfaces of the tub 2 and the drum 3 can be opened so that laundry can be put into or taken out of the drum 3 therethrough. A door 5, for opening and closing the opened front surfaces of the tub 2 and the drum 3, is hinged to the front panel 1a of the housing 1. A plurality of lifters 6, which are spaced from each other according to a designated distance, are arranged along the inner surface of the drum 3 in a longitudinal direction, and serve to lift laundry to a designated height by means of the rotation of the drum 3 and then to drop the laundry, thereby washing the laundry.

Water supply hoses 7, for supplying wash water from the outside to the washing machine, and a detergent container 8, for mixing a detergent into the supplied wash water, are installed on the upper panel of the housing 1. A drain casing 20, for discharging of wash water contained in the tub 2 to the outside in the wash, rinse and dehydration modes, is installed on the lower panel 1b of the housing 1, and a drain pump 21 and a drain filter 30 are positioned in the drain casing 20.

The drain filter 30 is detachably assembled with the drain casing 20, and the tub 2 is connected to the drain casing 20 by the drain hose 9. The drain hose 9 is extended to the outside of the housing 1, thereby allowing the wash water, contained in the tub 2, to be discharged to the outside of the housing 1.

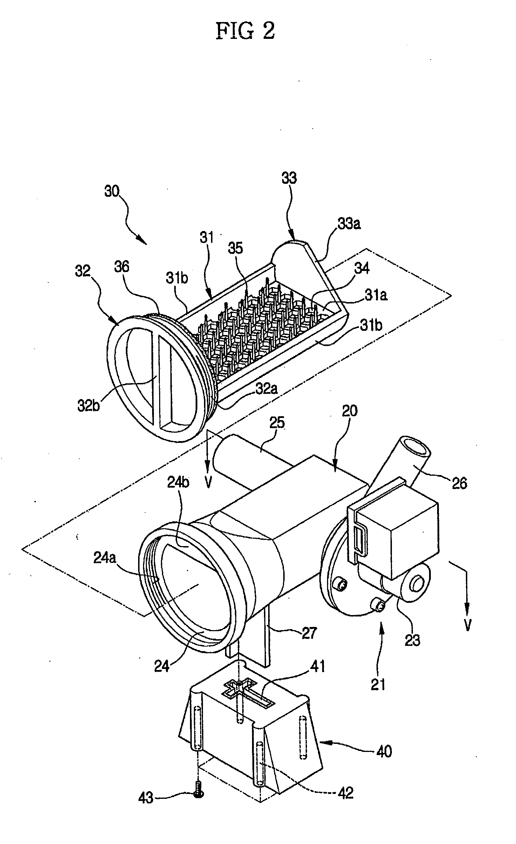

Hereafter, with reference to FIGS. 2 to 5, structures of the drain casing 20, the drain pump 21 and the drain filter 30, and assembly structure of the drain filter 30 and the drain casing 20 will now be described.

FIG. 2 is an exploded perspective view illustrating the drain casing 20 installed on the lower panel 1b of the housing 1 and connected to the tub 2 by the drain hose 9, and the drain filter 30 connected to the drain casing 20.

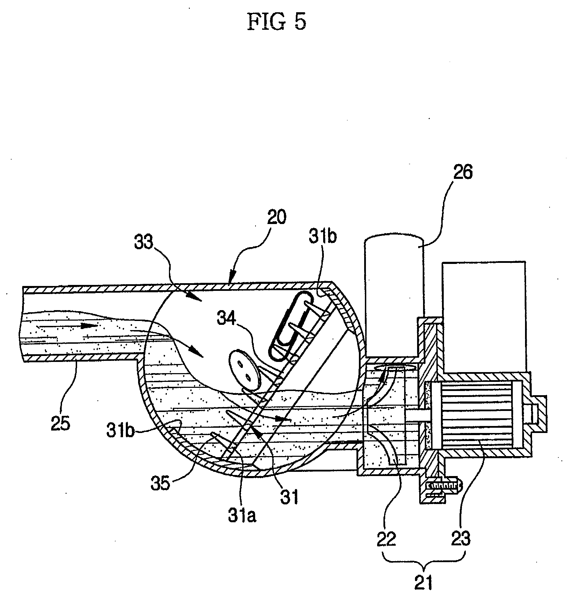

The drain casing 20 is hollowed to have a designated volume, for providing space for the wash water to flow therein. The drain pump 21 is positioned with the drain casing 20, and includes an impeller 22 (as illustrated in FIG. 5) for forcibly discharging the wash water and a driving motor 23, axially connected to the impeller 22, from the outside of the drain casing 20 for rotating the impeller 22.

The open front surface of the drain casing 20 forms a filter entrance, through which the drain filter 30 can be inserted into or removed from the drain casing 20. An inlet pipe 25, for causing the wash water to be introduced into the drain casing 20, and an outlet pipe 26, for causing the introduced wash water to be discharged to the outside of the drain casing 20, are respectively positioned at different sides of the drain casing 20.
The inlet pipe 25 is parallel to the upper surface of the drain casing 20, and the outlet pipe 26 is inclined upwards relative to the drain casing 20. Since the impeller 22 of the drain pump 21 is positioned below the outlet pipe 26 at the side surface of the drain casing 20, being opposite to the inlet pipe 25 (as illustrated in FIG. 5), the driving motor 23 of the drain pump 21 is installed at a position opposite to the inlet pipe 25.

The drain hose 9, connected to the tub 2, connects to the inlet pipe 25, and then extends to the outside of the housing 1 through outlet pipe 26, thereby causing the wash water contained in the tub 2 to be forcibly discharged to the outside of the housing 1 when the drain pump 21 is operated to rotate the impeller 22 (illustrated in FIG. 5).

The filter entrance 24 has an approximately cylindrical shape, with a screw thread 24a being formed along the inner circumference of the filter entrance 24. A horizontally formed guide protrusion 24b, obtained by extending the upper end of the filter entrance 24 downward, is provided at the end of the screw thread 24a. The screw thread 24a serves to promote insertion or removal of the drain filter 30 to or from the filter entrance 24, with the guide protrusion 24b serving to property align the drain filter 30 within the drain casing 20.

A connection protrusion 27, having an approximately cross-shaped section, protrudes downward from the lower end of the drain casing 20. The connection protrusion 27 can then be inserted into a support member 40 connected to the lower panel 1b of the housing 1 (illustrated in FIG. 1).

The support member 40 serves to absorb vibrations and noise generated by the operation of the drain pump 21 and to connect the drain casing 20 to the lower panel 1b of the housing 1. A groove 41, corresponding to the shape of the connection protrusion 27, is formed in the upper surface of the support member 40, thereby allowing the connection protrusion 27 to be fixedly inserted thereinto. Screw holes 42 are formed at corners of the lower surface of the support member 40, thereby allowing screws 43 to respectively pass through the lower panel 1b of the housing 1 and then to be respectively inserted into the screw holes 42, thus allowing the drain casing 20 to be assembled with the housing 1.

The drain filter 30 includes a filter member 31 for filtering the wash water, a hand lever 32 positioned at the front end of the filter member 31 for attaching or detaching the filter member 31 to or from the drain casing 20, and a guide plate 33 positioned at the rear end of the filter member 31 for guiding the filter member 31 along the inside of the drain casing 20 when the filter member 31 is positioned to accurately align with the position of the filter entrance 24 of the drain casing 20.

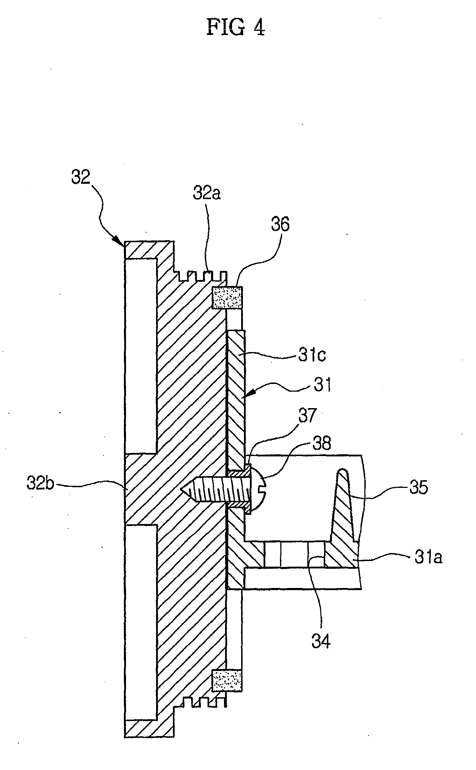

The filter member 31 includes a main body 31a having an approximately regular plate shape, a side surface 31b having a circular arc shape and extended from both sides of the main body 31a, and a front end 31c extended upward from the front end of the main body 31a (as illustrated in FIG. 4).

The main body 31a of the filter member 31 is provided with a plurality of filter holes 34 having a designated size, and a plurality of filter protrusions 35 protruding upward from areas between the filter holes 34. The filter holes 34 have a hexagonal shape so that the wash water passing through the filter holes 34 meets with little resistance. The main body 31a has sufficient strength to accommodate, and is provided with, as many filter holes 34 as possible.

The filter protrusions 35 positioned between the hexagonal filter holes 34 have a length larger than the depth of the filter holes 34, and protrude perpendicularly upward from the surface of the main body 31a, where the "depth" of the filter holes 34 is meant to correspond to a width or diameter of the holes, for example.

Foreign substances contained in the wash water are first caught by the filter protrusions 35, and are then caught by the filter holes 34, thereby being effectively filtered out by the filter member 31. Thus, it is possible to lengthen the lifetime of the drain filter 30 before a cleaning is required, while preventing foreign substances from clogging or damaging the impeller 22 of the drain pump 21.

The hand lever 32 has an approximately cylindrical shape corresponding to the shape of the filter entrance 24 of the drain casing 20, and a screw thread 32a is formed on the outer circumference of the hand lever 32, corresponding to the screw thread 24a of the filter entrance 24. A knob 32b for rotating the hand lever 32 protrudes from the outer surface of the hand lever 32. Further, a sealing member 36, for hermetically sealing the filter entrance 24 of the drain casing 20, is attached on an inner surface of the hand lever 32.

The guide plate 33, positioned at the rear end of the filter member 31, includes an inclined upper end 33a extended upward from one side of the filter member 31 and rectilinearly directed to the other side of the filter member 31. The guide plate 33, having the above-described structure, has an approximately fan shape at the rear end of the filter member 31, with the upper end 33a of the filter member 31 being inclined against the main body 31a of the filter member 31 at a designated angle.

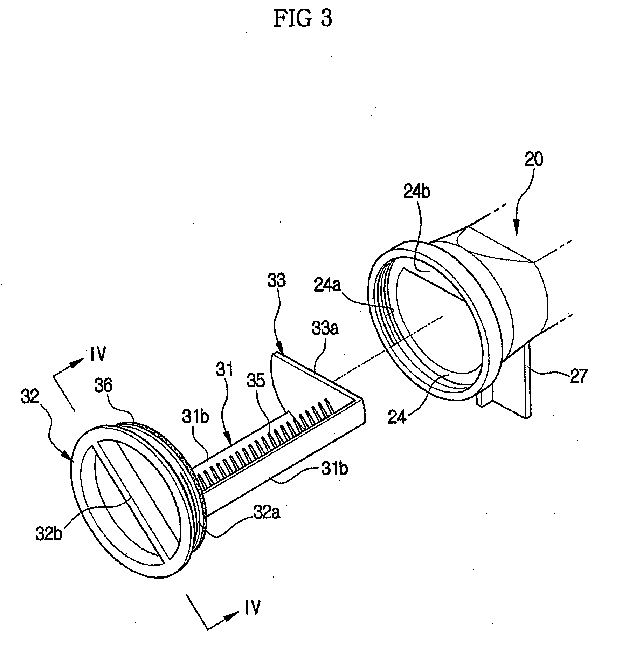

Accordingly, when the drain filter 30 is positioned such that the upper end 33a of the guide plate 33 is parallel with the guide protrusion 24b, as illustrated in FIG. 3, the inclined upper end of the guide plate 33 is aligned with the guide protrusion 24b of the filter entrance 24 so that the drain filter 30 can be simply inserted into the assembly position of the drain casing 20. With this arrangement, when the filter member 31 is positioned in the drain casing 20, the filter member 31 becomes inclined towards the inlet pipe 25 (as illustrated in FIG. 5).

As illustrated in FIG. 4, in order to fix the filter member 31 and rotate only the hand lever 32 while the drain filter 30 and filter member 31 are being inserted into, or removed from, the drain casing 20, the hand lever 32 is rotatably connected to the filter member 31.

That is, a hollowed bushing 37 is positioned in the front end 31c of the filter member 31, and serves to connect the hand lever 32 to the filter member 31 by a screw 38, thereby permitting the hand lever 32 to rotate relative to the filter member 31.

Accordingly, when the knob 32b of the hand lever 32 is rotated in one direction when the filter member 31 is inserted into the drain casing 20, the hand lever 32 can be rotated and the screw thread 32a of the hand lever 32 will engage with the screw thread 24a of the filter entrance 24, thereby allowing the drain filter 30 to be incorporated into the drain casing 20. Then, when the knob 32b is rotated in the opposite direction, the drain filter 30 can be disassembled from the drain casing 20.

When the hand lever 32 protrudes from the front panel 1a of the housing 1, the drain filter 30 can be detached from the drain casing 20 without the housing 1 required to be disassembled, thereby permitting the filter member 31 to be easily cleaned.

As illustrated in FIG. 5, when the drain filter 30 is incorporated within the drain casing 20, the filter member 31 is inclined towards the inlet pipe 25. In this state, when the driving motor 23 of the drain pump 21 is operated to rotate the impeller 22 of the drain pump 21, the wash water is introduced into the drain casing 20 through the inlet pipe 25. Thus, foreign substances, such as buttons or lint, contained in the wash water are first caught by the filter protrusions 35, perpendicularly protruded upward from the filter member 31, and residual foreign substances having passed through the filter protrusions 35 can then be caught by the filter holes 34. The filtered wash water can then pass through the impeller and be discharged to the outside through the outlet pipe 26.

As apparent from the above description, embodiments of the present invention provide a washing machine having a drain filter inclined towards an inlet pipe in a drain casing, with the drain filter being provided with a plurality of filter protrusions and a plurality of filter holes for eliminating foreign substances from wash water through two steps. In this arrangement, a large quantity of the foreign substances can be eliminated from the wash water, lengthening the time between cleanings of the drain filter, and effectively preventing defects or damage to the drain pump caused by foreign substances caught in an impeller of the drain pump.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A washing machine comprising:
a tub (2) to contain wash water;
a drain casing (20) to discharge the wash water; and
a drain filter (30), positioned in the drain casing, comprising a filter member (31) having a plurality of filter holes (34) and a plurality of filter protrusions (35).

2. The washing machine of claim 1, wherein the filter protrusions (35) perpendicularly protrude upward from a surface of the filter member (31), with the filter protrusions having a length larger than a depth of the filter holes (34).

3. The washing machine of claim 1 or 2, wherein each of the filter holes (34) has a hexagonal shape.

4. The washing machine of any preceding claim, further comprising a drain pump (21), installed in the drain casing (20), to forcibly discharge the wash water.

5. The washing machine of claim 4, wherein the drain pump (21) comprises an impeller (22), with a driving motor (23) for the impeller, positioned outside the drain casing, being connected to the impeller.

6. The washing machine of claim 5, wherein:
a front surface of the drain casing (20) forms a filter entrance (24) through which the drain filter can be inserted into or removed from the drain casing, with the casing comprising an inlet pipe (25) introducing the wash water into the drain casing and an outlet pipe (26) permitting the wash water to be discharged from the drain casing, respectively positioned along alternate sides of the drain casing; and
the impeller is installed close to the outlet pipe.

7. The washing machine of claim 6, wherein the filter member (31) is inclined relative to the inlet pipe (25).

8. The washing machine of claim 7, wherein a guide plate (33), having an upper end (33a) inclined relative to the filter member at a designated angle, is positioned at the rear end of the filter member (31), a guide protrusion (24b) corresponding to the inclined upper end of the guide plate is formed at the filter entrance (24) of the drain casing, and when the upper end of the guide plate of the drain filter aligns with the guide protrusion of the drain casing the drain filter can be inserted into the drain casing.

9. The washing machine of any of claims 5-8, further comprising:
a housing (1) containing the tub (2) and the drain casing (20); and
a support member (40) for fixing the drain casing, which includes the drain filter, to a lower panel of the housing.

10. The washing machine of claim 9, wherein a connection protrusion (27) protrudes downward from a lower portion of the drain casing (20), and a groove (41) for fixedly receiving the connection protrusion is formed in an upper surface of the support member. (40).

11. The washing machine of claim 9 or 10, wherein a screw hole (42) for screwing the support member (40) to the lower panel of the housing is formed in a lower surface of the support member.

12. The washing machine of any preceding claim, wherein the washing machine is encapsulated in a housing (1) and the drain filter (30) can be removed from the drain casing (20) without removal of the housing, with the drain casing protruding from the surface of the housing.

13. The washing machine of any preceding claim, wherein the filter member (31) is connected to an end of the drain filter (30), with the end of the drain filter being rotatable relative to the filter member, such that the filter member stays aligned in a particular orientation, and with the end of the drain filter being capable of sealing the drain filter into the drain casing.

14. A drain casing (20), comprising:
a main body having a designated volume;
an inlet pipe (25) and an outlet pipe (26) respectively positioned along opposing sides of the main body;
a filter entrance (24) along a front surface of the main body;
a drain filter (30), detachable from the main body through the filter entrance, with the drain filter including a plurality of filter holes (34) and a plurality of filter protrusions (35); and
a drain pump (21) installed adjacent the main body to forcibly discharge wash water from within the main body through the outlet pipe.

15. The drain casing of claim 14, wherein the filter protrusions (35) protrude perpendicularly upward from a surface of a filter member (31) of the drain filter, with the filter protrusions having a length larger than a depth of the filter holes (34).

16. The drain casing of claim 14 or 15, wherein a filter member (31), of the drain filter, including the plurality of filter holes and protrusions, is inclined relative to the inlet pipe (25).
